Europäisches Patentamt

European Patent Office

Office européen des brevets

(11) Publication number: **0 134 154**
**A1**

## (12) EUROPEAN PATENT APPLICATION

(21) Application number: **84305671.4**

(22) Date of filing: **21.08.84**

(51) Int. Cl.⁴: **C 08 L 51/06, C 08 L 25/12**

(30) Priority: **22.08.83 US 525087**

(43) Date of publication of application: **13.03.85**
**Bulletin 85/11**

(84) Designated Contracting States: **BE DE FR GB IT NL SE**

(71) Applicant: **UNIROYAL, INC., World Headquarters,**
**Middlebury Connecticut 06749 (US)**

(72) Inventor: **Wefer, John M., Saddle Ridge Road Newtown,**
**Fairfield Connecticut (US)**

(74) Representative: **Harrison, Michael Robert et al,**
**URQUHART-DYKES & LORD 11th Floor Tower House**
**Merrion Way, Leeds LS2 8PB West Yorkshire (GB)**

(54) Injection molding grade impact resistant composition.

(57) An injection molding impact resistant composition comprising 38 - 52% by weight of a grafted olefin copolymer rubber portion (A) which is a graft copolymer of styrene and acrylonitrile on an olefin terpolymer rubber the ratio of rubber to polymerized styrene and acrylonitrile in the graft copolymer being in the range of 40/60 to 60/40, an added separately prepared resinous portion (B) which is styrene-acrylonitrile resin, the intrinsic viscosity of the added separately prepared resin being from 0.5 to 0.6 deciliters per gram as measured in dimethylformamide at 30°C and the ratio of styrene to acrylonitrile being from 77/23 to 67/33 by weight, the total of (A) + (B) being 100%.

EP 0 134 154 A1

0134154

INJECTION MOLDING GRADE
IMPACT RESISTANT COMPOSITION

This invention relates to an injection molding grade impact resistant composition; more particularly, an AES composition.

The invention is concerned with the problem of providing an AES composition suitable for injection molding. By "AES" composition in the present context is meant a material comprising a graft copolymer of styrene and acrylonitrile on olefin-type terpolymer rubber, in admixture with additional separately prepared styrene-acrylonitrile resin. Impact resistant compositions of the AES type have previously been described (e.g., U.S. patent 4,202,948, Peascoe, May 13, 1980), but it has been desired to provide a composition of this kind that would be more suitable for use in injection molding.

The invention is directed to a composition providing excellent injection molding characteristics while retaining high impact strength, comprising 38-52% by weight of a grafted olefin copolymer rubber portion (A) which is a graft copolymer of styrene and acrylonitrile on an olefin terpolymer rubber, the ratio of rubber to polymerized styrene and acrylonitrile in the graft copolymer being in the range of 40/60 to 60/40, and an added separately prepared resinous portion (B) which is styrene-acrylonitrile resin, the intrinsic viscosity of the added separately prepared resin being from 0.4 to 0.6 deciliters per gram as measured in dimethylformamide at 30°C and the ratio of styrene to acrylonitrile being from 77/23 to 67/33 by weight, the total of (A) + (B) being 100%. When the described parameters are observed, this novel composition flows easily in injection molding equipment making it especially suitable for injection molding into difficult-to-fill molds and for making parts containing knit-lines.

The graft copolymer on which the composition of the invention is based may be made by conventional graft copolymerization methods, in which resin-forming materials, namely styrene and acrylonitrile, are graft copolymerized on an olefin-type terpolymer rubber spine, which is usually a copolymer of ethylene and propylene with another monomer (e.g., a copolymerizible non-conjugated diene such as ethylidene norbornene, dicyclopentadiene, hexadiene, etc. [as in the unsaturated terpolymers known as EPDM], or other monomer such as phenyl norbornene). The rubber spine amounts to 40 to 60% by weight of the graft copolymer. From 38 to 52 parts by weight of the graft copolymer is mixed with from 62 to 48 parts by weight of additional separately prepared styrene-acrylonitrile resin. Usually the over-all rubber content is from 19 to 25% by weight. The ratio of styrene to acrylonitrile in the composition is within the range of from 77:23 to 67:33, by weight (both in the polymerized resin forming monomers contained in the graft copolymer, and in the added separately prepared resin). For purposes of the invention it is important that the intrinsic viscosity of the added styrene-acrylonitrile resin be within the range of from 0.4 to 0.6 deciliters per gram, as measured in dimethyl formamide at 30°C. Other ingredients such as ultraviolet stabilizers and pigments may be added during the resin blending step.

In a preferred composition the styrene-acrylonitrile resin has an intrinsic viscosity of 0.49-0.55, and the rubber spine is an EPDM present in amount of 19-25% by weight. Typical of the properties of such a composition are the following:

| | |
|---|---|
| NIRT: | At least 5.0 ft.-lbs. |
| Single gated tensile strength: | At least 6,000 psi |
| Double gated tensile strength: | At least 5,000 psi |
| Viscosity at 400°F.: | Not greater than $175 \times 10^3$ poise; |

whre NIRT stands for the notched Izod impact strength at room temperature, measured on injection molded 1/8-inch bars (ASTM D-256). The single gated tensile strength (ASTM D-638) is measured on test specimens molded with a gate at one end in the usual manner. The double gated tensile strength is measured on specimens gated at each end so as to produce a weld or knit-line in the middle of the test specimen. The viscosity at 400°F is measured in a Sieglaff-McKelvey rheometer made by Tinius Olsen Testing Machine Company equipped with a 1/16-inch diameter by 1/4-inch land length round hole die at 3.3 reciprocal seconds shear rate.

Table I, below, shows data obtained on compositions made by blending (A) a graft copolymer with (B) various styrene-acrylonitrile resins. The preparation of the graft (A) is based on the procedure in Example 2 of Peascoe, U.S. Patent 4,202,948. A 10-gallon jacketed autoclave equipped with a thermometer and a motor stirrer is charged with 300 parts by weight of water, 0.225 part by weight of Methocel K-100 (trademark; hydroxypropyl methylcellulose produced by Dow Chemical Company), 39.5 parts by weight of ethylene propylene-5-ethylidene-2-norbornene copolymer (E/P weight ratio 60/40; iodine number 20; Mooney viscosity 68 ML-4 at 257°F) which has been ground to a Tyler mesh particle size 3, and a mixture of 39.3 parts by weight of styrene, 21.2 parts by weight of acrylonitrile, 1.6 parts by weight of Lupersol-11 (trademark; 75% t-butylperoxypivalate in mineral spirits produced by Pennwalt Company) and 0.5 part by weight of Irganox 1076 (trademark; octadecyl-3,5-di-tert-butyl-4-hydroxy-hydrocinnamate produced by Ciba-Geigy). The reaction mixture is heated to 80°F for 1 1/2 hours and then to 240°F and kept at this temperature for another 1 1/2 hours at which time the reactor mixture is cooled to room temperature and the graft copolymer recovered by filtering and drying in an oven at 66°C. The graft made in this manner has a rubber level of approximately 48%. Separately prepared styrene-acrylonitrile resins (B), having intrinsic viscosities ranging from 0.37 to 0.75, as indicated in the table, are blended with the graft copolymer (A) in amount sufficient to provide the calculated final EPDM content in the blend shown in the table. A Werner and Pfleiderer 53mm ZSK twin-screw extruder equipped with a high shear screw configuration is used to blend components (A) and (B). The table shows significant properties of the blends, particularly the notched Izod impact strength at room temperature, measured on injection molded 1/8-inch bars (ASTM D-256) and the tensile strength (ASTM D-638) measured on test specimens molded with a gate at one end in the usual manner (single gated) and on specimens gated at each end (double gated) so as to produce a weld or knit-line in the middle of the test specimen. Also shown is the viscosity measured at 400°F in a Sieglaff-McKelvey Rheometer made by Tinius Olson Testing Machine Company equipped with a 1/16-

inch diameter by 1/4-inch land length round hole die. The viscosity results are measured at 3.3 reciprocal seconds shear rate and are expressed as $10^3$ poise.

Of the various compositions shown in the table, only compositions 3 and 6 represent the practice of the invention; the other compositions (1, 2, 4, 5, 7, 8 9) are shown for purposes of comparison only. It will be seen that compositions 3 and 6, in which the various parameters prescribed for the invention are observed, have good impact strength combined with high tensile strength (single and double gated) and low viscosity. The combination of properties exhibited by materials exemplified by 3 and 6 make them uniquely suited to many injection molded applications. Low melt viscosity is essential for filling difficult molds such as those containing thin wall sections or requiring long or circuitous melt flow. Low viscosity also allows lower injection and clamping pressures for longer tool life. High impact strength is, however, important in many parts. Merely reducing the EPDM level or reducing the viscosity of the separately prepared SAN resin will reduce the melt viscosity but will generally reduce the impact strength in many cases to unacceptable levels. Where there are openings molded into the part or where multiple gates are used for large parts, the injected melt must also knit together with acceptable strength. In the table, only compositions 3 and 6 have a single-gated tensile strength over 6,000 psi and a double gated tensile strength over 5,000 psi while also combining the features of high impact (over 5.0 ft. lb.) and low melt viscosity (less than 175,000 poise).

It will be noted that composition #6 represents a lower viscosity material than composition #3 as a consequence of the slightly lower rubber level (21% versus 24%). Both compositions have an excellent balance of flow, impact and tensile properties as previously described although composition #6 (containing 21% rubber) may be more preferred in a particular application where the flow requirement in the mold is exceptionally difficult and composition #3 (containing 24% rubber) may be more preferred in applicatoins requiring good flow and exceptionally high impact strength. As is apparent from the property trends in the table, compositions containing significantly more than 24% elastomer, for example 26% elastomer, would clearly have tensile strength (both single and double gated) that falls below the preferred minimums already specified and would have a melt viscosity in excess of the preferred $175 \times 10^3$ poise maximum.

The table illustrates the surprising discovery that AES compositions meeting the preferred requirements of impact, flow, and tensile strength required for demanding injection molded applications can be obtained provided the rubber level is kept between about 19% to about 25% and provided that the intrinsic viscosity of the separately prepared resin is reasonably close to 0.52.

An example of a difficult to mold part also requiring good impact and knit-line strength is an automotive grille. Because of their excellent combination of impact strength, double gated tensile strength and low melt viscosity, compositions of the invention are ideally suited for injection molding of automotive grilles and other demanding parts.

TABLE I

AES COMPOSITIONS AND
INJECTION MOLDED PROPERTIES

|  | 1 | 2 | 3 | 4 | 5 |
|---|---|---|---|---|---|
| Graft | 50.5 | 50.5 | 50.5 | 50.5 | 43.9 |
| SAN 1 (0.75 IV; S/AN 70/30) | 49.5 | | | | |
| SAN 2 (0.65 IV; S/AN 71/29) | | 49.5 | | | 56.1 |
| SAN 3 (0.52 IV; S/AN 70/30) | | | 49.5 | | |
| SAN 4 (0.37 IV; S/AN 73/27) | | | | 49.5 | |
| (Calculated percent EPDM in blend) | 24 | 24 | 24 | 24 | 21 |
| Notched Izod Impact (ft.-lb./in.) | 14.1 | 13.5 | 11.0 | 1.2 | 6.1 |
| Tensile Strength (psi) | | | | | |
| Single gate | 5970 | 5990 | 6120 | | 8090 |
| Double gate | 4680 | 4880 | 5150 | | 6380 |
| Viscosity ($10^3$ poise) @3.3 $sec^{-1}$ shear rate | 384 | 303 | 169 | 108 | 189 |

TABLE I (continued)

| | 6 | 7 | 8 | 9 |
|---|---|---|---|---|
| Graft | 43.9 | 43.9 | 37.3 | 37.3 |
| SAN 1 (0.75 IV; S/AN 70/30) | | | | |
| SAN 2 (0.65 IV; S/AN 71/29) | | | 62.7 | |
| SAN 3 (0.52 IV; S/AN 70/30) | 56.1 | | | 62.7 |
| SAN 4 (0.37 IV; S/AN 73/27) | | 56.1 | | |
| (Calculated percent EPDM in blend) | 21 | 21 | 18 | 18 |
| Notched Izod Impact | 6.0 | 0.3 | 3.6 | 3.3 |
| Tensile Strength (psi) | | | | |
|   Single gate | 6660 | | 9120 | 7360 |
|   Double gate | 5630 | | 7550 | 5920 |
| Viscosity ($10^3$ poise) @3.3 $sec^{-1}$ shear rate | 135 | 54 | 148 | 101 |

The foregoing example may be repeated, using an ethylene-propylene-dicyclopentadiene terpolymer rubber as the spine for the graft copolymer (E/P weight ratio 68/32; iodine number 17; Mooney viscosity 67 ML-4 at 250°°F), with equivalent results.

CLAIMS:

1.  An injection molding grade impact resistant composition characterised in that it comprises 38-52% by weight of a grafted olefin copolymer rubber portion (A) which is a graft copolymer of styrene and acrylonitrile on an olefin terpolymer rubber, the ratio of rubber to polymerised styrene and acrylonitrile in the graft copolymer being in the range of 40/60 to 60/40, and an added separately prepared resinous portion (B) which is styrene-acrylonitrile resin, the intrinsic viscosity of the added separately prepared resin being 0.4 to 0.6 deciliters per gram as measured in dimethylformamide at $30^{\circ}C$ and the ratio of styrene to acrylonitrile being from 77/23 to 67/33 by weight, the total of (A) + (B) being 100%.

2.  A composition according to claim 1 characterised in that the olefin terpolymer rubber is an ethylene-propylene-non-conjugated diene terpolymer.

3.  A composition according to claim 1 or claim 2 characterised in that the overall rubber content is from 19 to 25% by weight.

4.  A composition according to any of the preceding claims characterised in that the rubber is an ethylene-propylene-ethylidene norbornene terpolymer.

5.  A composition according to any of the preceding claims characterised in that the intrinsic viscosity of the resin is 0.49 - 0.55.

6.  A composition according to any of the preceding claims characterised in that the composition has a notched Izod impact strength at room temperature of at least 5 ft. -lbs., a tensile strength of at least 6000 psi in a single-gated specimen and a tensile strength of at least 5000 psi in a double-gated specimen, and a viscosity not greater than $175 \times 10^{3}$ poise measured at $400^{\circ}F$ at a sheer rate of 3.3 reciprocal seconds.

7.  An injection molded automotive grille made of the composition of any of the preceding claims.

0134154

European Patent
Office

**EUROPEAN SEARCH REPORT**

Application number

EP 84 30 5671

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | GB-A-2 005 276 (UNIROYAL) * Claims * | 1-4 | C 08 L 51/06 C 08 L 25/12 |
| X | EP-A-0 044 682 (UNIROYAL) * Claims * | 1-4 | |
| Y | US-A-3 488 405 (Q.A. TREMENTOZZI et al.) * Claims * | 1 | |
| Y | US-A-3 489 821 (H.S. WITT et al.) * Claims * | 1 | |

|  |  |
|---|---|
|  | TECHNICAL FIELDS SEARCHED (Int. Cl.4) |
|  | C 08 L |

The present search report has been drawn up for all claims

| Place of search THE HAGUE | Date of completion of the search 06-11-1984 | Examiner FOUQUIER J.P. |
|---|---|---|

EPO Form 1503. 03.82